# EUROPÄISCHE PATENTANMELDUNG

(11) **EP 2 433 692 A1**
(43) Veröffentlichungstag der Anmeldung: **28.03.2012**
(21) Anmeldenummer: 11180296.3
(22) Anmeldetag: 07.09.2011
(51) Int. Cl.: B01D 33/11, E03F 5/14

(54) **Vorrichtung zum Entfernen von Siebgut aus in einem Gerinne strömender Flüssigkeit**

(30) Priorität: 24.09.2010 DE 102010041312
(71) Anmelder: Huber SE, 92334 Berching (DE)
(72) Erfinder: Frommann, Christian, 92318 Neumarkt (DE); Reber, Stefan, 90429 Nürnberg (DE); Spenger, Franz, 91187 Röttenbach (DE)
(74) Vertreter: Bergmeier, Werner

(57) **Zusammenfassung**

Die Erfindung betrifft eine Vorrichtung zum Entfernen von Siebgut aus in einem Gerinne (1) strömender Flüssigkeit, insbesondere Abwasser (2), mit einer schräggestellten, zumindest teilweise in die Flüssigkeit eintauchenden und mit Hilfe eines Antriebs um eine Drehachse antreibbaren Siebtrommel (4), die anströmseitig eine offene Stirnseite (5) aufweist, und mit einer wenigstens teilweise innerhalb der Siebtrommel (4) angeordneten Austragsvorrichtung für das Siebgut, vorzugsweise in Form einer Schneckenfördereinrichtung (11) oder einer Absaugeinrichtung (17), wobei die Austragsvorrichtung innerhalb der Siebtrommel (4) einen Zuführbereich, beispielsweise in Form eines Einwurftrichters, für das Siebgut umfasst. Erfindungsgemäß wird vorgeschlagen dass die Siebtrommel (4) eine gefaltete Siebwandung (19) aufweist.

## Beschreibung

Die vorliegende Erfindung betrifft eine Vorrichtung zum Entfernen von Siebgut aus in einem Gerinne strömender Flüssigkeit, insbesondere Abwasser, mit einer schräggestellten, zumindest teilweise in die Flüssigkeit eintauchenden und mit Hilfe eines Antriebs um eine Drehachse antreibbaren Siebtrommel, die anströmseitig eine offene Stirnseite aufweist, und mit einer wenigstens teilweise innerhalb der Siebtrommel angeordneten Austragsvorrichtung für das Siebgut, vorzugsweise in Form einer Schneckenfördereinrichtung oder einer Absaugeinrichtung, wobei die Austragsvorrichtung innerhalb der Siebtrommel einen Zuführbereich, beispielsweise in Form eines Einwurftrichters, für das Siebgut umfasst.

Eine entsprechende Vorrichtung ist beispielsweise aus der DE 34 20 157 C1 bekannt. Die hierin beschriebene Anlage weist einen mit seiner Achse schräg in ein Gerinne eingestellten zylindermantelförmigen Siebrost auf, der anströmseitig hydraulisch offen und abströmseitig im Wesentlichen hydraulisch geschlossen ausgebildet ist. Der Siebrost ist vorzugsweise mit einer Schlitzlochung versehen, die auf der Innenseite eine Abscheidefläche bildet, wobei die Flüssigkeit durch die Schlitze hindurchtritt und im Gerinne verbleibt. Der Siebrost wird in Verbindung mit einer Förderschnecke umlaufend angetrieben, die an einem Einwurftrichter beginnt, der koaxial im Bereich des Siebrosts ortsfest angeordnet und gelagert ist. Oberhalb des Einwurftrichters ist auf der Außenseite des Siebrosts eine ortsfest angeordnete Ablöseeinrichtung in Form einer Bürstenwalze oder einer Spritzwasserleiste vorgesehen, um von außen das an der Innenseite des Siebrosts befindliche Siebgut abzulösen. Das Siebgut fällt schließlich in den Einwurftrichter, an dem die Förderschnecke beginnt, und wird von dieser zu einer Abwurfstelle außerhalb der Flüssigkeit abtransportiert.

Auch wenn die bisher bekannten Filteranlagen bereits eine beachtliche Filterleistung aufweisen, ist es auch weiterhin erstrebenswert, die Leistungsfähigkeit gattungsgemäßer Anlagen zu steigern oder derart zu modifizieren, dass eine bestimmte Abscheideleistung bei geringerer Baugröße der Anlage realisiert werden kann.

Aufgabe der vorliegenden Erfindung ist es somit, eine Sieb- bzw. Filteranlage zum Entfernen von Siebgut aus in einem Gerinne strömender Flüssigkeit, wie beispielsweise einem Abwasserkanal, zu schaffen, die sich im Verhältnis zu ihren Abmessungen durch eine besonders hohe Filterleistung auszeichnet.

Die Aufgabe wird gelöst durch eine Vorrichtung mit den Merkmalen des Patentanspruchs 1. Erfindungsgemäß zeichnet sich die Vorrichtung dadurch aus, dass die Siebtrommel eine gefaltete Siebwandung aufweist. Auf diese Weise kann (bei gleichbleibendem Siebtrommeldurchmesser) im Vergleich zu herkömmlichen Siebtrommeln, die eine glatte Siebfläche aufweisen, eine erheblich höhere aktive Siebfläche zur Verfügung gestellt werden. Ein weiterer Vorteil in der erfindungsgemäßen Faltung liegt darin, dass sich die aus der zu filternden Flüssigkeit zurückgehaltenen Verunreinigungen in den durch die Faltung entstehenden innenliegenden Vertiefungen ansammeln und durch die Drehung der Siebtrommel nach oben gefördert werden. Es sind in diesem Fall keine zusätzlichen Fördertröge notwendig, auch wenn diese selbstverständlich auch weiterhin zusätzlich zum Einsatz kommen können. Nicht zuletzt erhält die Siebtrommel durch die Faltung der Siebfläche eine erhöhte Stabilität, so dass die Siebtrommel entsprechend selbsttragend konstruiert werden kann.

Hierbei ist es besonders vorteilhaft, wenn die Siebwandung zickzack-artig, wellenförmig oder stufenförmig gefaltet ist, so dass sich Siebwandtäler mit Siebwandbergen abwechseln. Generell ist an dieser Stelle festzuhalten, dass der Begriff "gefaltet" nicht dahingehend einschränkend auszulegen ist, dass durch die Faltung, ähnlich wie bei einer Ziehharmonika, kantige Knicke entstehen müssen. So kann es durchaus von Vorteil sein, wenn die Siebtrommel einen wellenförmigen Querschnitt aufweist, da hierdurch keine spitzwinkligen Bereiche entstehen, in denen eventuell verstärkt Schmutzstoffe anhaften könnten. Im Prinzip ist die Erfindung daher nicht auf eine bestimmte Oberflächenverformung der Siebtrommel beschränkt. Vielmehr sind sämtliche Siebtrommeln umfasst, die im Gegensatz zu einer glatten Zylindersiebfläche eine Siebfläche aufweisen, die Vertiefungen und Erhöhungen umfasst, so dass die Siebfläche im Ergebnis größer ausfällt als die Siebfläche einer glatten Siebtrommel gleichen Durchmessers. Auch muss sich die Faltung der Siebtrommel nicht über den gesamten Bereich der Siebfläche erstrecken. So wäre es beispielsweise möglich, nur den bezüglich des Gerinnes unten angeordneten Bereich zu falten. Gleiches gilt für den oberen Abschnitt oder auch dazwischenliegende Bereiche. Möglich wäre es auch, dass sich gefaltete und nicht gefaltete Bereiche in Drehrichtung abwechseln, wobei sich die Art, Größe und Verteilung nach dem jeweiligen Einsatzzweck der Anlage bemisst.

Vorteilhaft ist es zudem, wenn die Siebwandung zumindest teilweise aus einem eine Vielzahl von Durchbrechungen aufweisenden Metall, beispielsweise einem Loch- oder Schlitzblech, oder einem, insbesondere mit Hilfe einer Trägerstruktur abgestützten, Maschengewebe besteht. Auf diese Weise kann die die Siebtrommel aufweisende Anlage für verschiedenste Filteraufgaben Verwendung finden, wobei der Durchmesser der Siebflächenöffnungen, durch welche die Flüssigkeit abfließen kann, von wenigen pm bis zu einigen cm reichen kann. Ebenso können Filter- bzw. Siebmaterialien aus Kunststoffen zum Einsatz kommen, wobei sämtliche Siebflächen selbsttragend ausgestaltet sind oder entsprechend durch eine Stützstruktur getragen werden können.

Auch ist es äußert vorteilhaft, wenn die Siebwandtäler und die Siebwandberge parallel, windschief oder radial zur Drehachse der Siebtrommel verlaufen. Während eine parallele Ausrichtung eine besonders einfache Herstellung ermöglicht, kann durch eine windschiefe oder auch schraubenlinienförmige Ausrichtung der oben beschriebene Fördereffekt der zurückgehaltenen Verunreinigungen positiv beeinflusst werden. Im Gegensatz hierzu entsteht durch einen radialen Verlauf der Siebwandtäler und -berge nur ein geringer Fördereffekt. Dennoch kommt es auch in diesem Fall zu einer Vergrößerung der zur Verfügung stehenden Siebfläche. Selbstverständlich können auch verschiedene Verläufe kombiniert werden, so dass sich beispielsweise Flächen mit einer parallelen Ausrichtung mit Abschnitten einer radialen Ausrichtung abwechseln.

Des Weiteren ist es vorteilhaft, wenn die Siebtrommel zumindest an einer Stirnseite ein Versteifungselement aufweist. Während die Siebtrommel zwar auch bereits durch die Faltung eine gegenüber dem Stand der Technik erhöhte Steifigkeit erhält, wird durch zusätzliche Versteifungselemente sichergestellt, dass die Siebtrommel auch bei härtesten Beanspruchungen, beispielsweise bei der Entfernung von Steinen oder sonstigen großen bzw. spitzen Verunreinigungen, ihre Form behält. Die Versteifungselemente können dabei beispielsweise bandförmig ausgestaltet werden und um die Außenseite der Siebtrommel gelegt und mit dieser verbunden werden. Auch sind innere Versteifungen, z.B. in Form von parallel zur Drehachse verlaufende Mitnehmerleisten, denkbar, die einen Transport der Verunreinigungen in den oberen Abwurfbereich der Siebtrommel bewirken bzw. unterstützen.

Ebenso ist es vorteilhaft, wenn das Versteifungselement als Versteifungsring ausgebildet ist. Ein derartiger Ring kann hierbei entweder im Bereich der Stirnseiten oder aber auch im dazwischenliegenden Abschnitt der Siebtrommel angeordnet werden. Ist der Ring bzw. sind mehrere Ringe im Bereich der Stirnseiten angeordnet, so ist es von Vorteil, diese mit der Außenkante der gefalteten Siebtrommel derart zu verbinden, dass zwischen Ring und Siebfläche keine ungefilterte Flüssigkeit entweichen kann.

Auch ist es äußert vorteilhaft, wenn der Versteifungsring eine mittige Öffnung mit einem Durchmesser aufweist, der kleiner oder gleich dem kleinsten inneren Durchmesser der Siebtrommel ist. Hierdurch kann vermieden werden, dass die Siebtrommel zwischen Siebfläche und mittiger Öffnung Durchlässe aufweist, die ein Passieren von Verunreinigungen erlauben würde.

Vorteilhaft ist es, wenn die Siebtrommel wenigstens einen, beispielsweise ringförmigen, Flansch aufweist, über den sie mit dem Antrieb in Wirkverbindung steht, wobei die Verbindung beispielsweise über einen Antriebsarm realisiert werden kann, der wiederum über eine Förderschnecke mit dem Motor in Verbindung stehen kann. Der Flansch kann zudem auch als Adapter zwischen der Siebtrommel und der restlichen Anlage, z. B. dem genannten Antriebsarm, dienen, so dass unterschiedliche Siebtrommeln schnell und einfach ausgetauscht werden können.

Besonders vorteilhaft ist es, wenn der radiale Abstand zwischen minimalem und maximalem Durchmesser der Siebtrommel kleiner oder gleich der Ringbreite des Versteifungsrings bzw. der radialen Ausdehnung des Flansches bezüglich der Drehachse der Siebtrommel ist. Während der Versteifungsring bzw. der Flansch im zuletzt genannten Fall praktisch den parallel zur Drehachse der Siebtrommel verlaufenden Querschnitt der Siebfläche abdeckt, entsteht bei einer kleineren Öffnung eine Kante, die sich nach innen und in radialer Richtung über die einzelnen Falten der Siebtrommel hinaus erstreckt. Da die im Gerinne anströmende Flüssigkeit diese Kante passieren muss, sollte diese Öffnung jedoch nicht zu klein gewählt werden.

Vorteile bringt es zudem mit sich, wenn der Flansch mit dem Versteifungselement in Verbindung steht, wobei vorzugsweise zwischen Flansch und Versteifungselement eine Dichtung angeordnet ist. Die Siebtrommel besteht in diesem Fall aus der eigentlichen, die erfindungsgemäße Faltung aufweisende Siebwandung, die vorzugsweise im Bereich beider Stirnseiten einen Versteifungsring aufweist. Auf diese Weise erhält man eine Siebtrommel, die getrennt von der restlichen Anlage gefertigt und sicher transportiert werden kann. Vor der Montage wird die Siebtrommel schließlich mit dem Flansch verbunden, der wiederum entsprechende Befestigungselemente (Bohrungen, Bolzen, Nuten oder Verschraubungselemente) aufweist, mit dem der Flansch mit der Siebtrommel und direkt oder indirekt mit dem Motor der Anlage verbunden werden kann. Alternativ kann auf den Einsatz der Flansche auch verzichtet werden, wobei die Siebtrommel in diesem Fall über entsprechende Befestigungselemente im Bereich der Versteifungselemente mit der Anlage verbunden werden kann.

Vorteilhaft ist es zudem, wenn die Außenfläche des Versteifungselements und/oder des Flansches bündig mit der Einhüllenden der Siebtrommel verläuft. Da nämlich die Siebtrommel für den Einbau in ein die Flüssigkeit führendes Gerinne konzipiert ist, ist es notwendig, dass die Flüssigkeit über eine der beiden Stirnseiten der Siebtrommel in dieselbe einströmen kann. Es ist daher von Vorteil, wenn die Einströmkante dieser Stirnseite möglichst tief platziert werden kann. Dies ist wiederum dann möglich, wenn das Versteifungselement oder der Flansch nach außen nicht über die Einhüllende (= Zylinder mit einem Durchmesser, der dem maximalen Durchmesser der Siebwandung entspricht) hinausragt.

Auch ist es von Vorteil, wenn die Siebtrommel Verstärkungselemente, insbesondere in Form von Verstärkungsleisten, aufweist. Diese Elemente können zudem beispielsweise schaufelförmig gegen die Siebfläche angestellt sein, um die zurückgehaltenen Verunreinigungen in den Bereich der Austragseinrichtung zu fördern. Des Weiteren können die Verstärkungsleisten mit den Versteifungselementen, insbesondere den Versteifungsringen, oder auch den Flanschen verbunden sein. Zusätzlich oder alternativ ist auch eine Verbindung mit der Siebwandung selbst möglich, beispielsweise über Schweiß(punkt)verbindungen zwischen der Siebwandung (z. B. im Bereich der Siebwandtäler) und den Verstärkungselementen.

Vorteilhaft ist es, wenn die Verstärkungselemente parallel oder windschief zur Drehachse der Siebtrommel verlaufen. Auch sind Kombinationen verschieden ausgerichteter Verstärkungselemente möglich, so dass im Ergebnis eine Siebtrommel mit hoher radialer und axialer Stabilität entsteht. Vorteilhaft ist es zudem, wenn die Verstärkungselemente mit der Siebwandung und/oder dem zumindest einen Versteifungselement und/oder dem wenigstens einen Flansch verbunden, vorzugsweise verschweißt, sind, so dass die Siebtrommel im Ergebnis ein stabiles Gerüst aufweist, das äußert hohen Belastungen standhalten kann.

Nicht zuletzt ist es von Vorteil, wenn das Verhältnis der Anzahl der Faltungen der Siebwandung zum Durchmesser der Siebtrommel im Bereich zwischen 40/m und 180/m liegt. Diese Werte haben sich als besonders günstig erwiesen, da in diesem Bereich bei vertretbaren Mehrkosten (im Vergleich zu einer glatten Siebfläche) eine signifikante Vergrößerung der Siebfläche und damit der Abscheideleistung der Anlage realisiert werden kann.

Weitere Vorteile der Erfindung sind in den nachfolgenden Ausführungsbeispielen beschrieben. Es zeigen:
- **Figur 1**: eine Seitenansicht einer Siebvorrichtung gemäß dem Stand der Technik,
- **Figur 2**: eine Seitenansicht eines Ausschnitts einer weiteren Siebvorrichtung,
- **Figur 3**: eine perspektivische Ansicht einer erfindungsgemäßen Siebtrommel,
- **Figur 4**: eine perspektivische Ansicht der Siebtrommel gemäß Figur 3 mit aufgesetzten Flanschen,
- **Figur 5**: eine Schnittdarstellung einer Siebtrommel,
- **Figur 6**: eine Schnittdarstellung einer alternativen Ausführungsform einer erfindungsgemäßen Siebtrommel, und
- **Figur 7**: eine weitere Schnittdarstellung einer erfindungsgemäßen Siebtrommel.

Vorab sei erwähnt, dass in Figuren, die mehrere gleichartige Bauteile oder Abschnitte zeigen, teilweise nur eines von mehreren gleichartigen Bauteilen mit Bezugszeichen versehen ist, um eine gute Übersicht zu gewährleisten.

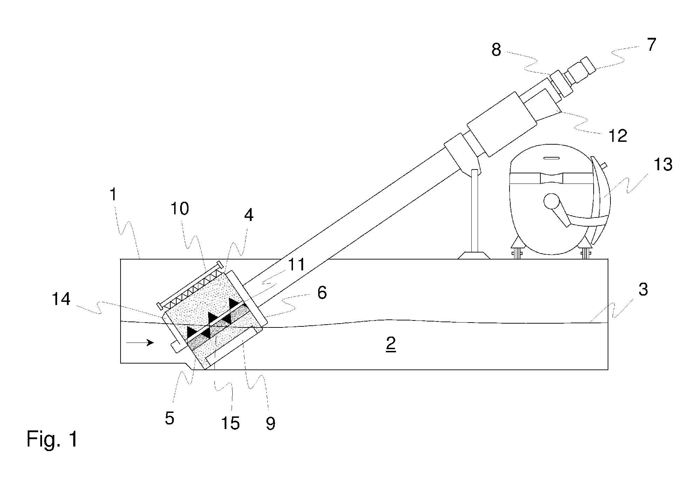

Figur 1 zeigt einen Teil eines Gerinnes 1, in welchem mit Siebgut verschmutztes Abwasser 2 mit einem meist variierenden Wasserstand 3 in Richtung des Pfeils strömt. Die darin angeordnete Siebvorrichtung ist mit ihrer Achse schrägstehend im Gerinne 1 eingebaut und reicht vorzugsweise bis zum Boden des Gerinnes 1, wobei zwischen Gerinne 1 und Vorrichtung eine entsprechende, nicht gezeigte Abdichtung vorhanden sein kann, so dass das verschmutzte Abwasser 2 die Vorrichtung nicht unfiltriert passieren kann.

Die Vorrichtung selbst umfasst ein zylindermantelförmiges Siebelement in Form einer zylindrischen Siebtrommel 4 (in Figur 1 teilweise geschnitten, um ins Innere blicken zu können), dessen Siebfläche beispielsweise durch ein Loch- oder Schlitzblech oder auch durch ein, vorzugsweise von einem Trägerkorb gestütztes, Maschengewebe gebildet werden kann.

Die Siebtrommel 4 weist anströmseitig eine offene Stirnseite 5 auf, durch welche das verschmutzte Abwasser 2 in den Innenraum der Siebtrommel 4 einströmen kann. Abströmseitig ist eine entsprechend abgedichtete und damit hydraulisch geschlossene Stirnseite 6 vorgesehen.

Während der Filtration wird die Siebtrommel 4 mit Hilfe eines Motors 7 und vorteilhafterweise über ein Getriebe 8 in eine Drehbewegung versetzt. Das von der Filterfläche zurückgehaltene Siebgut wird von der Filterfläche zurückgehalten und schließlich durch die Drehbewegung nach oben gefördert, wobei die Siebtrommel 4 zur Unterstützung des Siebguttransports entsprechende Mitnehmerleisten 9 aufweisen kann.

Im oberen Bereich ist schließlich eine Spritzdüsenleiste 10 angeordnet, die ein Ablösen des anhaftenden Siebguts bewirkt, so dass dieses nach unten in einen Einwurftrichter und von dort in den Bereich einer Austragsvorrichtung in Form einer Schneckenfördereinrichtung 11 fällt (anstelle der Spritzdüsenleiste 10 können selbstverständlich auch Luftdüsen, Schaber oder Bürstenelemente angeordnet sein).

Die Schneckenfördereinrichtung 11 reicht schließlich bis in den Bereich einer Auswurfstelle 12 im oberen Abschnitt der Siebvorrichtung, so dass das Siebgut nach oben gefördert und schließlich in einen entsprechenden Container 13 entsorgt werden kann. Die Schneckenfördereinrichtung 11 kann im Verlauf der Förderstrecke eine abnehmende Schraubenhöhe aufweisen, so dass es zusätzlich zu einer Komprimierung des Siebguts innerhalb des oberen Förderabschnitts kommt.

Der Antrieb der Schneckenfördereinrichtung 11 erfolgt in der Regel diskontinuierlich, so dass Stillstandszeiten mit Umlaufzeiten abwechseln. Zur Übertragung der Drehbewegung des Motors 7 auf die Siebtrommel 4 ist schließlich am unteren Ende der Schneckenwelle ein Antriebsarm 14 vorgesehen, der Schneckenwelle und Siebtrommel 4 miteinander verbindet.

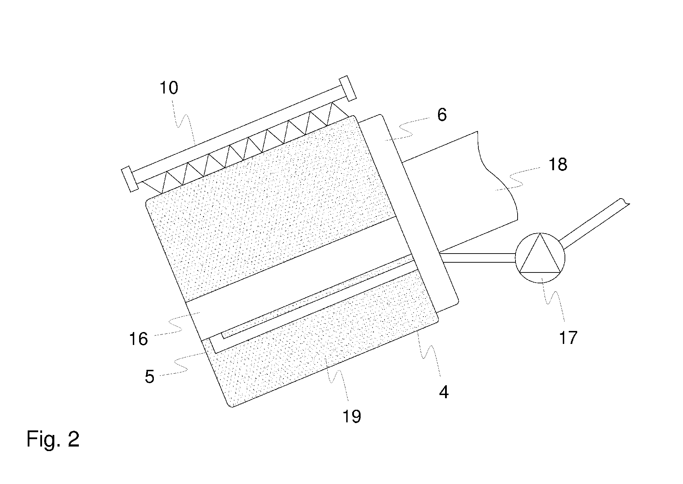

Auch in Filteranlagen, die für die Filtration besonders feiner Siebstoffe vorgesehen sind, bringt die Siebtrommel 4 gemäß der Erfindung erhebliche Vorteile gegenüber dem Stand der Technik. So kann die im Folgenden noch genauer beschriebene Siebtrommel 4 beispielsweise auch in Anlagen eingesetzt werden, die anstelle einer Schneckenfördereinrichtung 11 (die einen Austrag sehr feiner Siebstoffe meist nicht zuverlässig bewerkstelligen kann), eine Absaugeinrichtung 17, wie sie in Figur 2 gezeigt ist, aufweisen. Die Rotation der Siebtrommel 4 erfolgt hier beispielsweise über eine Antriebsachse 18, die wiederum mit einem Motor 7 verbunden ist. Die Siebstoffe, die sich auch bei derartigen Siebvorrichtungen an der rotierenden Innenfläche der Siebtrommel 4 sammeln, werden wiederum beispielsweise mit Hilfe einer Spritzdüsenleiste 10 von der Siebfläche entfernt und gelangen schließlich in eine beispielsweise trogartig ausgebildete Auffangvorrichtung 16 im Inneren des Filterelements. Das Siebgut und das Spritzwasser bilden schließlich eine Suspension, die mit Hilfe der Absaugeinrichtung 17 abgesaugt und entsprechend weiterbearbeitet werden kann. Die Auffangvorrichtung 16 kann dabei beispielsweise einen U-förmigen bzw. halbkreisförmigen Querschnitt aufweisen und ist in der Regel im Bereich der Drehachse der Siebtrommel 4 angeordnet.

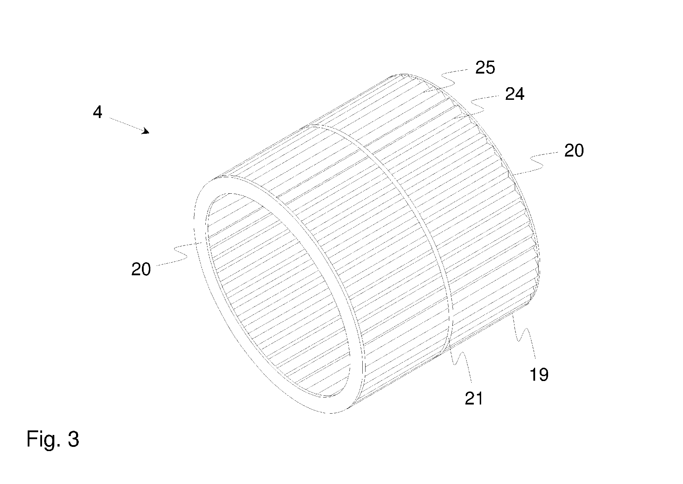

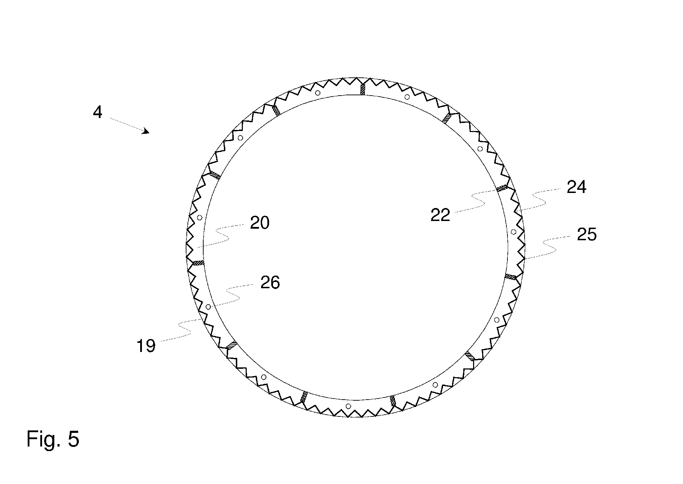

Eine perspektivische Ansicht einer erfindungsgemäßen Siebtrommel 4, wie sie in einer Anlage gemäß der vorigen Figurenbeschreibung eingesetzt werden kann, zeigt Figur 3. Wie hieraus ersichtlich, weist die Siebtrommel 4 einen zylinderförmigen Grundkörper auf, der aus der eigentlichen Siebwandung 19 sowie entsprechenden Versteifungselementen in Form von stirnseitig angebrachten Versteifungsringen 20 besteht. Zusätzlich oder alternativ kann die Siebtrommel 4 auch im Bereich der Siebfläche Versteifungselemente aufweisen. Denkbar sind beispielsweise Metallbänder 21, die zwischen den Stirnseiten um die Siebwandung 19 gelegt und befestigt werden. Auch können entsprechende Ringe oder Verstärkungsleisten 22 im Inneren der Siebtrommel 4 angebracht werden (s. Fig. 5 bis 7). Die Siebtrommel 4, wie sie in Figur 3 gezeigt ist, bildet schließlich eine selbsttragende Einheit, die somit einfach zu transportieren und vor Ort einzubauen ist.

Erfindungsgemäß ist nun vorgesehen, dass die Siebtrommel 4 eine gefaltete Siebwandung 19 aufweist, die im gezeigten Ausführungsbeispiel eine zickzackartige Faltung mit entsprechenden Siebwandtälern 24 und Siebwandbergen 25 aufweist. Hierdurch entsteht eine Siebfläche, die eine signifikant größere Siebfläche aufweist als vergleichbare Siebtrommeln mit glatter Siebwandung. Während die Siebwandtäler 24 und Siebwandberge 25 im gezeigten Beispiel parallel zur mittigen Drehachse der Siebtrommel 4 verlaufen, ist auch eine Anordnung möglich, bei der die Siebwandtäler 24 und Siebwandberge 25 windschief oder radial zur Drehachse der Siebtrommel 4, d. h. parallel zum gezeigten Metallband 21, verlaufen.

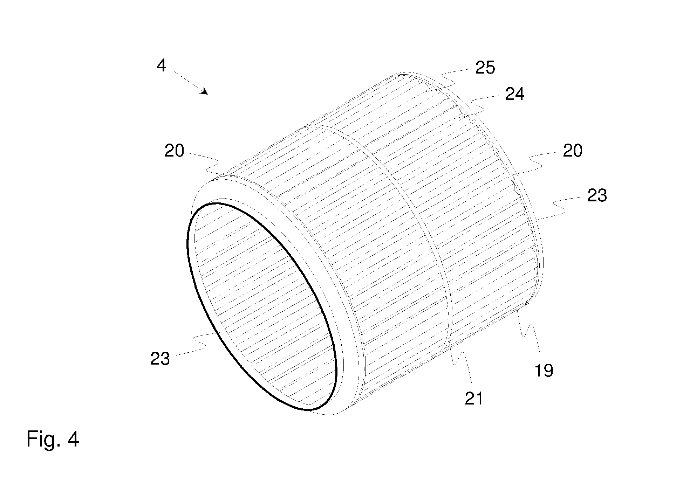

Figur 4 zeigt eine erfindungsgemäße Siebtrommel 4, wie sie im Zusammenhang mit Figur 3 beschrieben wurde, wobei im Bereich der Stirnseiten ein zusätzlicher Flansch 23 angebracht ist. Die Flansche 23, die mit den Versteifungsringen 20 verschraubt, verschweißt, verklebt oder auch vernietet sein können, dienen als zusätzlicher Stabilisator und zudem der Verbindung mit einem Antriebsarm 14, der wiederum mit einem Motor 7 in Verbindung steht (s. Fig. 1). Durch die Wahl des entsprechenden Flansches 23 kann die Siebtrommel 4 schließlich in unterschiedliche Filteranlagen eingebaut werden, so dass dessen Einsatzbreite weiter erhöht werden kann. Der Antriebsarm 14 kann hierbei ebenfalls lösbar oder auch fest (z. B. mittels Schweißnaht) mit dem Flansch 23 verbunden sein. Auch kann der Flansch 23 bereits einen entsprechenden Antriebsarm 14 umfassen, so dass keine weitere Verbindung notwendig ist.

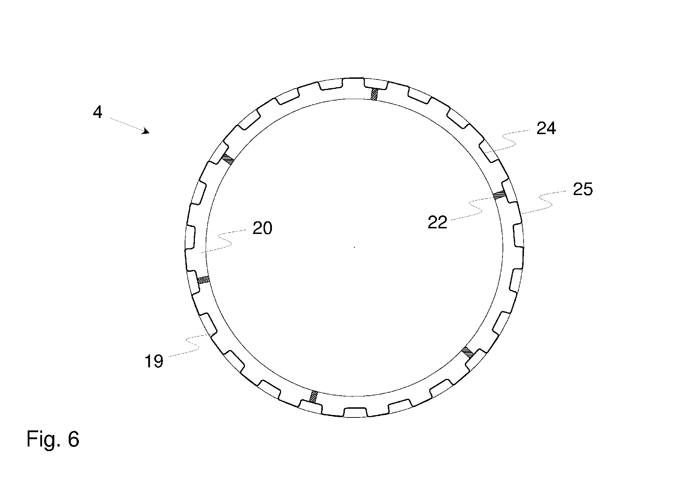

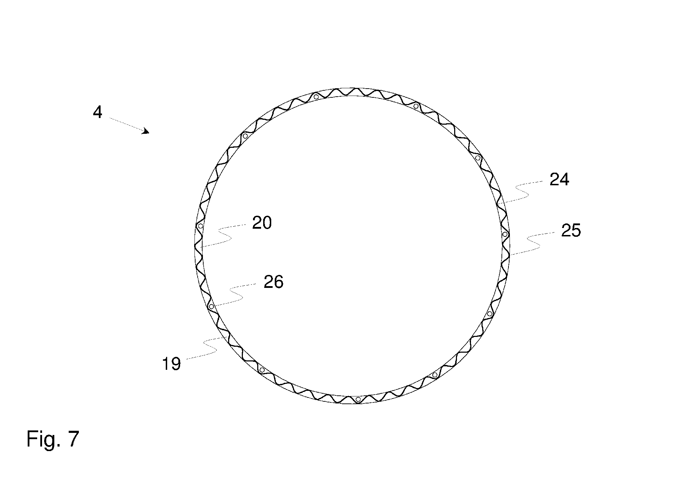

Wie bereits erwähnt, können auch im Inneren der Siebtrommel 4 Verstärkungsleisten 22 angeordnet sein. Diese erstrecken sich vorzugsweise zwischen den beiden Stirnseiten der Siebtrommel 4 und können an den Stirnseiten mit den genannten Versteifungsringen 20 bzw. dem oder den Flanschen 23 verbunden sein, um schließlich der Stabilisierung der Siebwandung 19 zu dienen. Darüber hinaus können diese auch die Funktion der Mitnehmerleisten 9 übernehmen, wie sie im Zusammenhang mit Figur 1 beschrieben wurden. Einen Querschnitt einer erfindungsgemäßen Siebtrommel 4, aus der die Lage der Verstärkungsleisten 22 hervorgeht, zeigen die Figuren 5 und 6. Wie hieraus ersichtlich, sind die Verstärkungsleisten 22 mit der Siebwandung 19, beispielsweise durch Punktschweißen, sowie dem hinteren Versteifungsring 20 verbunden. Der Versteifungsring 20 kann hierbei entweder in Richtung Drehachse über die Faltung hinausragen oder aber, wie aus Figur 7 ersichtlich, mit dieser bündig abschließen.

Darüber hinaus weisen die Versteifungsringe 20 Bohrungen 26 auf, über welche die Siebtrommel 4 mit einem entsprechenden Flansch 23, einem Antriebsarm 14 oder sonstiger Anlagenteile verbunden werden kann.

Schließlich ist aus den Figuren 5 bis 7 ersichtlich, dass die Siebtrommel 4 nicht zwangsläufig eine zickzackartige Faltung aufweisen muss. Denkbar sind ebenso stufenförmige (Fig. 6) oder wellenförmige (Fig. 7) Faltungen.

Ebenso kann die Siebwandung 19 bereits selbstragend konstruiert sein, so dass auf zusätzliche Verstärkungselemente verzichtet werden kann (Fig. 7).

Im Übrigen ist die Erfindung nicht auf die dargestellten Ausführungsbeispiele beschränkt. Vielmehr sind sämtliche Kombinationen der beschriebenen Einzelmerkmale, wie sie in den Ansprüchen, der Beschreibung sowie den Figuren gezeigt oder beschrieben sind und soweit eine entsprechende Kombination technisch möglich bzw. sinnvoll erscheint, Gegenstand der Erfindung.

### Bezugszeichenliste

- 1: Gerinne
- 2: Abwasser
- 3: Wasserstand
- 4: Siebtrommel
- 5: offene Stirnseite
- 6: geschlossene Stirnseite
- 7: Motor
- 8: Getriebe
- 9: Mitnehmerleiste
- 10: Spritzdüsenleiste
- 11: Schneckenfördereinrichtung
- 12: Auswurfstelle
- 13: Container
- 14: Antriebsarm
- 15: Einwurftrichter
- 16: Auffangvorrichtung
- 17: Absaugeinrichtung
- 18: Antriebsachse
- 19: Siebwandung
- 20: Versteifungsring
- 21: Metallband
- 22: Verstärkungsleiste
- 23: Flansch
- 24: Siebwandtal
- 25: Siebwandberg
- 26: Bohrung

## Patentansprüche

1. Vorrichtung zum Entfernen von Siebgut aus in einem Gerinne (1) strömender Flüssigkeit, insbesondere Abwasser (2), mit einer schräggestellten, zumindest teilweise in die Flüssigkeit eintauchenden und mit Hilfe eines Antriebs um eine Drehachse antreibbaren Siebtrommel (4), die anströmseitig eine offene Stirnseite (5) aufweist, und mit einer wenigstens teilweise innerhalb der Siebtrommel (4) angeordneten Austragsvorrichtung für das Siebgut, vorzugsweise in Form einer Schneckenfördereinrichtung (11) oder einer Absaugeinrichtung (17), wobei die Austragsvorrichtung innerhalb der Siebtrommel (4) einen Zuführbereich, beispielsweise in Form eines Einwurftrichters, für das Siebgut umfasst, **dadurch gekennzeichnet, dass** die Siebtrommel (4) eine gefaltete Siebwandung (19) aufweist.

2. Vorrichtung nach Anspruch 1, **dadurch gekennzeichnet, dass** die Siebwandung (19) zickzack-artig, wellenförmig oder stufenförmig gefaltet ist, so dass sich Siebwandtäler (24) mit Siebwandbergen (25) abwechseln.

3. Vorrichtung nach einem oder mehreren der vorangegangenen Ansprüche, **dadurch gekennzeichnet, dass** die Siebwandung (19) zumindest teilweise aus einem eine Vielzahl von Durchbrechungen aufweisenden Metall, beispielsweise einem Loch- oder Schlitzblech, oder einem, insbesondere mit Hilfe einer Trägerstruktur abgestützten, Maschengewebe besteht.

4. Vorrichtung nach einem oder mehreren der Ansprüche 2 und 3, **dadurch gekennzeichnet, dass** die Siebwandtäler (24) und die Siebwandberge (25) parallel, windschief oder radial zur Drehachse der Siebtrommel (4) verlaufen.

5. Vorrichtung nach einem oder mehreren der vorangegangenen Ansprüche, **dadurch gekennzeichnet, dass** die Siebtrommel (4) zumindest an einer Stirnseite (5; 6) ein Versteifungselement aufweist.

6. Vorrichtung nach dem vorangegangenen Anspruch, **dadurch gekennzeichnet, dass** das Versteifungselement als Versteifungsring (20) ausgebildet ist.

7. Vorrichtung nach dem vorangegangenen Anspruch, **dadurch gekennzeichnet, dass** der Versteifungsring (20) eine mittige Öffnung mit einem Durchmesser aufweist, der kleiner oder gleich dem kleinsten inneren Durchmesser der Siebtrommel (4) ist.

8. Vorrichtung nach einem oder mehreren der vorangegangenen Ansprüche, **dadurch gekennzeichnet, dass** die Siebtrommel (4) wenigstens einen, beispielsweise ringförmigen, Flansch (23) aufweist, über den sie mit dem Antrieb in Wirkverbindung steht.

9. Vorrichtung nach einem oder mehreren der Ansprüche 6 bis 8, **dadurch gekennzeichnet, dass** der radiale Abstand zwischen minimalem und maximalem Durchmesser der Siebtrommel (4) kleiner oder gleich der Ringbreite des Versteifungsrings (20) und/oder der radialen Ausdehnung des Flansches (23) bezüglich der Drehachse der Siebtrommel (4) ist.

10. Vorrichtung nach den Ansprüchen 5 und 8, **dadurch gekennzeichnet, dass** der Flansch (23) mit dem Versteifungselement in Verbindung steht, wobei vorzugsweise zwischen Flansch (23) und Versteifungselement eine Dichtung angeordnet ist.

11. Vorrichtung nach einem oder mehreren der Ansprüche 5 bis 10, **dadurch gekennzeichnet, dass** die Außenfläche des Versteifungselements und/oder des Flansches (23) bündig mit der Einhüllenden der Siebtrommel (4) verläuft.

12. Vorrichtung nach einem oder mehreren der vorangegangenen Ansprüche, **dadurch gekennzeichnet, dass** die Siebtrommel (4) Verstärkungselemente, insbesondere in Form von Verstärkungsleisten (22), aufweist.

13. Vorrichtung nach dem vorangegangenen Anspruch, **dadurch gekennzeichnet, dass** die Verstärkungselemente parallel oder windschief zur Drehachse der Siebtrommel (4) verlaufen.

14. Vorrichtung nach einem oder mehreren der Ansprüche 5 bis 13, **dadurch gekennzeichnet, dass** die Verstärkungselemente mit der Siebwandung (19) und/oder dem zumindest einen Versteifungselement und/oder dem wenigstens einen Flansch (23) verbunden, vorzugsweise verschweißt, sind.

15. Vorrichtung nach einem oder mehreren der vorangegangenen Ansprüche, **dadurch gekennzeichnet, dass** das Verhältnis der Anzahl der Faltungen der Siebwandung (19) zum Durchmesser der Siebtrommel (4) im Bereich zwischen 40/m und 180/m liegt.
